# EUROPEAN PATENT SPECIFICATION

(11) **EP 2 231 298 B1**
(45) Date of publication and mention of the grant of the patent: **23.11.2016**
(21) Application number: 08862484.6
(22) Date of filing: 09.12.2008
(51) Int. Cl.: B01D 19/00, C02F 1/20

(54) **DEGASIFIER FOR A LIQUID**
ENTGASER FÜR EINE FLÜSSIGKEIT
APPAREIL DE DÉGAZAGE DE LIQUIDE

(30) Priority: 19.12.2007 FI 20070992
(43) Date of publication of application: 29.09.2010
(73) Proprietor: Konepaja Facor Oy, 53500 Lappeenranta (FI)
(72) Inventor: HEIKKINEN, Eero, FI-53400 Lappeenranta (FI)
(74) Representative: Seppo Laine Oy
(86) International application number: PCT/FI2008/050716
(87) International publication number: WO 2009/077644

(56) References cited:
- CH-A- 400 747
- DE-A1- 3 925 242
- JP-A- S56 147 605
- US-A- 2 825 653
- US-A- 2 839 194

## Description

The present invention concerns an apparatus for removing air or gas mixed with different kinds of liquids. Above all, the apparatus is applicable to hydraulic and circulation lubrication systems, where the air mixed with the liquid causes various problems with respect to the operation and durability of the apparatus. For example the pumps used in these systems easily suffer from the cavitation phenomenon boosted by the air contained in the liquid to be pumped.

It has been tried to remove the air bubbles for example from the circulation lubrication systems of big machines like paper machines by leading the circulating lubricant to a space where an underpressure is prevailing. Separation of the air bubbles from the lubricant in the underpressurized space has been boosted by different arrangements like by pressure variations, by guiding the lubricant in the underpressurized space to flow or pass along different surfaces, by mixing the lubricant in the underpressurized space with a beater, etc. With apparatus based on these operation principles a problem has been especially the weak effect, as a result of which the apparatuses have been big in order to guarantee the sufficient degasing effect.

A degassing apparatus with a rotating drum is known from DE3925242A1. These problems have been solved by means of an apparatus in accordance with the present invention comprising a treatment container, through which the liquid to be treated is led. Characterizing to the invention, the container comprises a chamber being closed by immersing in the liquid led to the container, and the apparatus comprises means for creating underpressure in the chamber. The chamber is provided with a screen fabric rotating along an endless loop path and extending to immerse in the liquid closing the chamber and extending above the surface thereof.

According to a special feature of the invention, the liquid, from which the mixed gas must be removed, is led to the container so that it passes through the screen fabric.

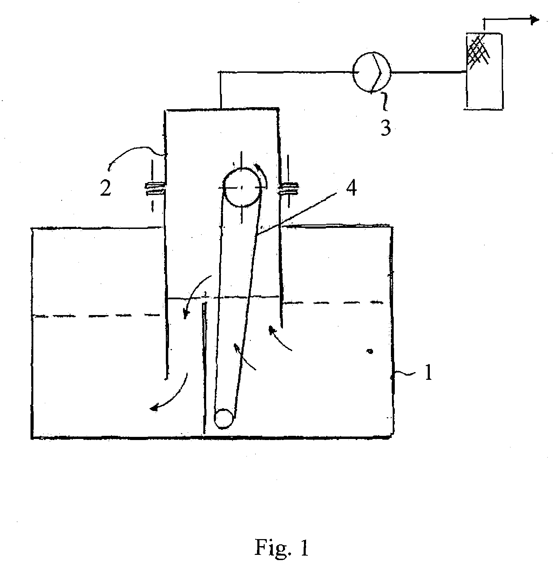

A principle application of the apparatus in accordance with the invention is shown in the enclosed Figure 1.

The apparatus comprises a container 1, through which the liquid to be treated is led. The container can be, for example, a part of a circulation lubrication system, like a circulation lubrication system of a paper machine. These kinds of containers are already known as parts of corresponding circulation lubrication systems, and the lubricant circulating in the system has been treated in them to remove the air mixed therewith. One treatment arrangement is to locate inclined plates in the container, along the surface of which the lubricant entering the container is made to flow as a thin film. The container is kept under underpressure. Air bubbles mixed with the lubricant are released from the lubricant and aspirated through the device providing the underpressure.

According to the basic idea of the present invention, a chamber 2 is located in the container 1. The width of the chamber is substantially congruent with the width of the container and it is open at its lower end, extending, however, so deep in the container 1 that it immerses below the prevailed liquid level of the container. The chamber is separated by the liquid from the rest of the space of the container 1.

A screen fabric 4 is arranged in the chamber 2, extending over the cross section thereof, said screen fabric 4 being arranged as a loop path over two sheaves. The lower sheave is arranged near the bottom of the chamber 1, and the upper sheave clearly above the prevailing liquid level of the chamber. Driving force is transmitted to the sheave or sheaves causing a rotational movement of the screen fabric along its path, to immerse in the liquid and to rise from it.

The screen fabric 4 can be for example a wire-cloth screen or some other suitable cloth coherent with the liquid to be treated. When the screen fabric immerses in the liquid, the gas bubbles in it attach to the holes of the screen, and rise together with the screen above the liquid level. The liquid naturally tends to flow downwards, thereby thinning the liquid membrane retaining the bubbles, and facilitating the separation of the bubbles from the surface forces. The released gas is sucked by means of a vacuum pump 3, and led away from the apparatus, eventually through a liquid separator.

The mesh size of the screen fabric (ranging from 0,3 to 3,0 mm), rotating speed of the screen fabric and the underpressure prevailed in the chamber 2 are selected according to respective purpose of use, said selections being effected primarily by the viscosity of the liquid to be treated.

## Claims

1. An apparatus for removing air from a liquid, said apparatus comprising a liquid treating container (1), through which the liquid to be treated is led, **characterized in that** the container includes a chamber (2) closeable by immersion in the liquid that is led to the container, that the apparatus comprises means (3) for creating underpressure in the chamber, and that the chamber is provided with a screen fabric (4) rotating along an endless loop path extending to be immersed in the liquid closing the chamber and extending above the surface thereof, and that the width of the chamber (2) is congruent with the width of the container, and an open lower end of said chamber (2) extending so as to be immersed below a prevailed liquid level of the container (1), and that the screen fabric (4) in the chamber (2) is extending over the cross section of the chamber (2) and is arranged as a loop path over two sheaves so that the upper sheave is above the prevailed liquid level of the container, wherein said sheaves are arranged so that driving force is transmitted to a sheave or sheaves.

2. An apparatus in accordance with claim 1, **characterized in that** the liquid led to the container (1) is guided to pass through the screen fabric.

## Patentansprüche

1. Einrichtung zur Entfernung von Luft aus einer Flüssigkeit, wobei die Einrichtung einen Flüssigkeits-Behandlungs-Behälter (1) umfasst, durch den die zu behandelnde Flüssigkeit geleitet wird, **dadurch gekennzeichnet, dass** der Behälter eine durch Eintauchen in die zu dem Behälter geleitete Flüssigkeit verschließbare Kammer (2) enthält, dass die Einrichtung Mittel (3) zum Schaffen von Unterdruck in der Kammer umfasst, und dass die Kammer mit einem Siebgewebe (4) versehen ist, das sich längs eines Endlosschleifenwegs dreht, der sich so erstreckt, dass er in die die Kammer verschließende Flüssigkeit eingetaucht ist und sich oberhalb der Oberfläche davon erstreckt und dass die Breite der Kammer (2) mit der Breite des Behälters kongruent ist, und ein offenes unteres Ende der Kammer (2) sich so erstreckt, dass es unterhalb eines vorherrschenden Flüssigkeits-Niveaus des Behälters (1) eingetaucht ist, und dass das Siebgewebe (4) in der Kammer (2) sich über den Querschnitt der Kammer (2) erstreckt und als Schleifenweg über zwei Laufrollen so angeordnet ist, dass die obere Laufrolle oberhalb des vorherrschenden Flüssigkeits-Niveaus des Behälters ist, wobei die Laufrollen so angeordnet sind, dass die Antriebskraft auf eine Laufrolle oder Laufrollen übertragen wird.

2. Einrichtung nach Anspruch 1, **dadurch gekennzeichnet, dass** die Flüssigkeit, die zu dem Behälter (1) geleitet wird, so geführt wird, dass sie durch das Siebgewebe gelangt.

## Revendications

1. Appareil pour enlever l'air d'un liquide, ledit appareil comprenant un récipient de traitement de liquide (1), par lequel le liquide devant être traité est dirigé, **caractérisé en ce que** le récipient inclut une chambre (2) pouvant être fermée par immersion dans le liquide qui est dirigé dans le récipient, **en ce que** l'appareil comprend un moyen (3) pour créer une dépression dans la chambre, et **en ce que** la chambre est pourvue d'une toile d'écran (4) tournant le long d'un chemin en boucle sans fin s'étendant pour être immergé dans le liquide fermant la chambre et s'étendant au-dessus de la surface de celui-ci, et **en ce que** la largeur de la chambre (2) est appropriée à la largeur du récipient,
et une extrémité inférieure ouverte de ladite chambre (2) s'étendant de sorte à être immergée sous un niveau de liquide qui prévaut du récipient (1), et que la toile d'écran (4) dans la chambre (2) s'étend sur la section transversale de la chambre (2) et est arrangée comme un chemin en boucle sur deux poulies de sorte que la poulie supérieure soit au-dessus du niveau de liquide qui prévaut du récipient, dans lequel lesdites poulies sont arrangées de sorte qu'une force d'entrainement soit transmise à une poulie ou aux poulies.

2. Appareil selon la revendication 1, **caractérisé en ce que** le liquide dirigé dans le récipient (1) est guidé pour passer à travers la toile d'écran.
